# EUROPEAN PATENT SPECIFICATION

(11) **EP 2 959 956 B1**
(45) Date of publication and mention of the grant of the patent: **18.12.2019**
(21) Application number: 14754559.4
(22) Date of filing: 14.02.2014
(51) Int. Cl.: B01D 53/14

(54) **LIQUID FOR ABSORBING AND RECOVERING CARBON DIOXIDE IN GAS, AND METHOD FOR RECOVERING CARBON DIOXIDE WITH USE OF SAME**
FLÜSSIGKEIT ZUR ABSORPTION UND RÜCKGEWINNUNG VON KOHLENDIOXID IN GAS UND VERFAHREN ZUR RÜCKGEWINNUNG VON KOHLENDIOXID DAMIT
LIQUIDE DESTINÉ À ABSORBER ET RÉCUPÉRER LE DIOXYDE DE CARBONE CONTENU DANS UN GAZ, ET PROCÉDÉ DE RÉCUPÉRATION DE DIOXYDE DE CARBONE METTANT EN OEUVRE CELUI-CI

(30) Priority: 25.02.2013 JP 2013035149
(43) Date of publication of application: 30.12.2015
(73) Proprietor: Nippon Steel Corporation, Tokyo (JP)
(72) Inventor: HIGASHII, Takayuki, Kizugawa-shi Kyoto 619-0292 (JP); CHOWDHURY, Firoz Alam, Kizugawa-shi Kyoto 619-0292 (JP); GOTO, Kazuya, Kizugawa-shi Kyoto 619-0292 (JP); MATSUZAKI, Yoichi, Tokyo 100-8071 (JP); ONODA, Masami, Tokyo 100-8071 (JP)
(74) Representative: Vossius & Partner Patentanwälte Rechtsanwälte mbB
(86) International application number: PCT/JP2014/053485
(87) International publication number: WO 2014/129400

(56) References cited:
- WO-A1-2012/002394
- JP-A- H02 504 367
- JP-A- 2005 296 897
- JP-A- 2011 194 388
- US-A- 5 209 914
- US-A1- 2013 101 493

## Description

### Technical Field

The present invention relates to a liquid for absorbing and recovering carbon dioxide contained in a gas, and a method for efficiently absorbing and recovering carbon dioxide in a gas, the method using the liquid.

### Background Art

In recent years, climate change and natural disasters presumably caused by global warming have had a serious influence on agricultural production, living conditions, energy consumption, etc. Global warming is believed to be due to an increase in greenhouse gases, such as carbon dioxide, methane, nitrous oxide, and chlorofluorocarbons (CFCs), in the atmosphere, in association with an increase in human activity. The main gas among the greenhouse gases is atmospheric carbon dioxide, and there is thus a worldwide need for a measure to reduce carbon dioxide emissions into the atmosphere.

Examples of sources of carbon dioxide include thermal power plants using coal, heavy oil, natural gas, or the like as a fuel; ironworks blast furnaces where iron oxide is reduced with coke; ironworks converters where carbon in pig iron is combusted to produce steel; factory boilers; cement plant kilns; and transportation equipment using gasoline, heavy oil, light oil, or the like as a fuel, such as automobiles, ships, and aircrafts. Except for transportation equipment, these sources of carbon dioxide are fixed facilities, which are easily adapted to implement measures for reducing carbon dioxide emissions into the atmosphere.

Several methods for separating and recovering carbon dioxide from gases exhausted from the above-mentioned sources are hitherto known.

For example, a method for absorbing carbon dioxide by bringing an aqueous solution of an alkanolamine into contact with a carbon dioxide-containing gas in an absorption tower is known. Examples of known alkanolamines include monoethanolamine (MEA), diethanolamine (DEA), triethanolamine (TEA), methyl diethanolamine (MDEA), diisopropanolamine (DIPA), diglycolamine (DGA), and the like. Typically, MEA is often used.

In general, alkanolamines have high solubility in water, and the alkanolamine concentration is preferably higher to more efficiently separate and recover carbon dioxide. However, the rate at which carbon dioxide is recovered decreases as the alkanolamine concentration increases. Thus, the development of a liquid, for absorbing carbon dioxide, that achieves higher reaction efficiency has not been attained.

To recover carbon dioxide from a liquid in which the carbon dioxide is absorbed, the liquid is heated to, for example, 120°C to separate the carbon dioxide from the liquid containing the absorbed carbon dioxide. However, when the heat of reaction between the carbon dioxide and the alkanolamine is high, a large amount of energy is required to recover the carbon dioxide. For example, when MEA is used, the heat of reaction with one mole of carbon dioxide is as high as 80 kJ (80 kJ/mol CO₂), and to separate and recover carbon dioxide in an electric power plant by using MEA, energy that corresponds to about 20% of the generated electric power is required.

From the viewpoint of carbon dioxide emissions into the atmosphere, as well as energy-saving and resource-saving, this additional energy consumption is a major problem in the practical use for separation and recovery of carbon dioxide. There is thus a need for a carbon dioxide-absorbing liquid for absorbing and recovering carbon dioxide with lower energy consumption, i.e., with high energy efficiency, and a method therefor.

Various studies have been conducted to address the above problems. Patent Literature 1 discloses a method for removing carbon dioxide from a combustion exhaust gas, the method comprising bringing an aqueous solution of a so-called hindered amine, which is an amine compound having a steric hindrance of alkyl groups or the like around the amino group, into contact with a combustion exhaust gas at atmospheric pressure to absorb carbon dioxide into the aqueous solution. Patent Literature 1 discloses 2-methylaminoethanol (which hereafter may be referred to as MAE) and 2-ethylaminoethanol (which hereafter may be referred to as EAE) as specific examples of hindered amines. In the Examples of Patent Literature 1, an aqueous solution containing 30 wt% of MAE or EAE was used. Although not used in the Examples, other amine compounds such as 2-isopropylaminoethanol (which hereafter may be referred to as IPAE) are also mentioned as examples of hindered amines.

Patent Literature 2 discloses an aqueous solution consisting of IPAE, which is also a hindered amine. Patent Literature 2 mentions high performance of carbon dioxide absorption and separation as a feature of this solution. However, as shown in the Comparative Examples, Patent Literature 2 discloses that when the concentration of IPAE was 60 wt%, the carbon dioxide absorption rate and the amount of carbon dioxide separated were reduced, resulting in deterioration in carbon dioxide absorption and separation performance of the aqueous solution.

An amine compound, which is an active ingredient of such an aqueous solution for absorbing carbon dioxide, is typically used at a molar concentration of 3 to 5 mol/L and at a weight concentration of 35 to 50 wt%, as shown in many Examples. It is known that the use thereof in a higher concentration deteriorates the carbon dioxide absorption performance of the solution.

Patent Literature 3 discloses an aqueous alkanolamine solution in a high concentration in which the surface tension of the absorbing solution is reduced by adding a surfactant. In industrial use, however, there is a need for improvement: in the case of using a fluorine compound as a surfactant, it is necessary to improve environmental impact and industrial availability, and in the case of using polyethylene glycol or the like as a surfactant, it is necessary to improve the influence of foaming etc. on the process for separating and recovering carbon dioxide.

Patent Literature 4 discloses a process comprising treating a gaseous stream with an aqueous absorbent comprising a polyamine.

Patent Literature 5 discloses an absorbent composition comprising a polyamine, a tertiary monoamine, and water, and a process using the composition.

Patent Literature 6 discloses an absorption medium comprising an oligoamine and a primary or secondary alkanolamine, and a process for removing acid gases using an aqueous solution of the absorption medium. Patent Literature 7 discloses an absorption medium comprising an oligoamine and a piperazine derivative, and a process for removing acid gases using an aqueous solution of the absorption medium. The content of the primary or secondary alkanolamine in the Examples of Patent Literature 6, or the content of the piperazine derivative in the Examples of Patent Literature 7 was less than 40 wt% relative to the aqueous solution of the absorption medium.

Patent Literature 8 discloses a method for deacidizing a gas using an absorbent solution comprising a reactive compound such as an alkanolamine. Patent Literature 9 discloses a method for deacidizing a gaseous effluent using an absorbent solution comprising a reactive compound such as an alkanolamine.

As described above, in separation and recovery of carbon dioxide contained in a gas, there is a demand for a liquid, for absorbing carbon dioxide, that enables absorption and separation of carbon dioxide with high efficiency, and a method for recovering high-purity carbon dioxide with low energy consumption.

Patent Literature 10 relates to a specific aqueous solution for absorbing and collecting carbon dioxide from a gas containing carbon dioxide, characterized by comprising 50-70 wt% of a secondary amine compound represented by general formula [1] of Patent Literature 10 and a surfactant; and a method for absorbing and collecting carbon dioxide using the aqueous solution.

Patent Literature 11 relates to specific liquid capable of absorbing gaseous acid compounds, said liquid containing one or a plurality of tertiary alkanolamines and a specific CO₂ absorption activator.

### Citation List

### Patent Literature

PTL 1: JP2871334B
PTL 2: JP2009-006275A
PTL 3: WO2012/002394
PTL 4: JP2012-533414A
PTL 5: JP2013-501608A
PTL 6: JP2011-525422A
PTL 7: JP2011-525423A
PTL 8: JP2006-136885A
PTL 9: JP2009-529420A
PTL 10: WO 2012/002394
PTL 11: JPH2-504367A

### Summary of Invention

### Technical Problem

An object of the present invention is to provide a liquid and a method that both not only enable absorption of carbon dioxide in a gas with high efficiency, but also achieve separation of carbon dioxide with high efficiency to recover high-purity carbon dioxide with low energy consumption.

### Solution to Problem

The present inventors conducted extensive research on a liquid, for absorbing carbon dioxide, that makes it possible to efficiently absorb and separate carbon dioxide to recover high-purity carbon dioxide. As a result, the inventors found that the use of a liquid for absorbing and recovering carbon dioxide, the liquid comprising 50 wt% or more of a secondary amine compound, a predetermined polyamine compound, and water, increases the amount of carbon dioxide separated per unit of the absorbing liquid, and the rate at which the absorbing liquid absorbs carbon dioxide. The present invention has thus been accomplished.

More specifically, the present invention is defined in the claims. The disclosure further provides the liquid for absorbing and recovering carbon dioxide according to Items 1 to 6 below, and the method for absorbing and recovering carbon dioxide according to Item 7 below.

Item 1. A liquid for absorbing and recovering carbon dioxide from a carbon dioxide-containing gas, the liquid comprising:
   a secondary amine compound (A) represented by Formula (1)

      R-NH-(CH₂)ₙ-OH (1)

      wherein R represents a C₁₋₄ alkyl group, and n represents an integer of 2 to 5;
   a polyamine compound (B) represented by Formula (2)

      R¹R¹N-(X)ₘ-NR³R⁴ (2)

      wherein R¹, R², R³, and R⁴ each independently represent a hydrogen atom or a C₁₋₂ alkyl group, Xs each represent -CH₂-, -O-, -NH-, or -N(CH₃)-, and m represents an integer of 5 to 20, with the proviso that at least one of m Xs is -O-, -NH-, or -N(CH₃)-, and two consecutive Xs adjacent to X representing -O-, -NH-, or -N(CH₃)-each represent -CH₂-; and
   water (C),
   the content of the secondary amine compound (A) being 50 wt% or more.
Item 2. The liquid according to Item 1, wherein the content of the secondary amine compound (A) is 50 to 70 wt% (more preferably 55 to 65 wt%).
Item 3. The liquid according to Item 1 or 2, wherein the content of the polyamine compound (B) is 0.1 to 5 wt%, based on the total weight of the liquid.
Item 4. The liquid according to Item 3, wherein the content of the polyamine compound (B) is 0.1 to 1 wt% (particularly preferably 0.1 to 0.8 wt%), based on the total weight of the liquid.
Item 5. The liquid according to any one of Items 1 to 4, wherein R is isopropyl, *n*-butyl, or *sec*-butyl, and n is 2 or 3.
Item 6. The liquid according to any one of Items 1 to 5, wherein the polyamine compound (B) is at least one polyamine selected from the group consisting of diethylenetriamine, triethylenetetramine, tetraethylenepentamine, pentaethylenehexamine, spermine, spermidine, 3,3'-diaminodipropylamine, *N,N*'-bis(3-aminopropyl)ethylenediamine, *N,N'*-bis(2-aminoethyl)-1,3-propanediamine, 3,3'-diamino-*N-*methyldipropylamine, *N,N*-bis[3-(methylamino)propyl]methylamine, 3,3'-iminobis(*N,N*-dimethylpropylamine), 2,2'-oxybis(ethylamine), and 1,2-bis(2-aminoethoxy)ethane.
Item 7. A method for absorbing and recovering carbon dioxide from a carbon dioxide-containing gas, the method comprising the steps of:
   (1) bringing the carbon dioxide-containing gas into contact with the liquid according to any one of Items 1 to 6 to absorb carbon dioxide from the gas; and
   (2) heating the liquid obtained in step (1), which contains the absorbed carbon dioxide, to separate the carbon dioxide from the liquid.

### Advantageous Effects of Invention

In separation and recovery of carbon dioxide with the liquid for absorbing and recovering carbon dioxide of the present invention, absorption of carbon dioxide contained in a gas into the liquid as well as separation of carbon dioxide from the liquid in which the carbon dioxide is absorbed are performed with high efficiency. The present invention can thus provide a method for recovering high-purity carbon dioxide with low energy consumption.

The use of the secondary amine compound in a high concentration in the liquid leads to a reduction in the amount of the circulation flow of the liquid in the cycle of absorption and separation of carbon dioxide, thereby making it possible to downsize the absorption tower, separation tower, and equipment associated with such towers. Conventionally used absorbing liquids containing MEA are highly corrosive to carbon steel, and are believed to become more corrosive particularly when they contain MEA in a high concentration. On the other hand, the liquid containing a secondary amine compound of the present invention is less corrosive to carbon steel even when it contains the compound in a high concentration, and does not require the use of expensive, high-grade, corrosion-resistant steel in plant construction. Consequently, the liquid for absorbing and recovering carbon dioxide of the present invention is also expected to achieve a cost reduction effect in equipment investment and equipment operation.

### Description of Embodiments

The present invention is described below in detail.

### Liquid for Absorbing and Recovering Carbon Dioxide

The liquid for absorbing and recovering carbon dioxide from a carbon dioxide-containing gas of the present invention consists essentially of
a secondary amine compound (A) represented by Formula (1)

   R-NH-(CH₂)ₙ-OH (1)

   wherein R represents a C₁₋₄ alkyl group, and n represents an integer of 2 to 5;
a polyamine compound (B) represented by Formula (2)

   R¹R²N-(X)ₘ-NR³R⁴ (2)

   wherein R¹, R², R³, and R⁴ each independently represent a hydrogen atom or a C₁₋₂ alkyl group, Xs each represent -CH₂-, -O-, -NH-, or -N(CH₃)-, and m represents an integer of 5 to 20, with the proviso that at least one of m Xs is -O-, -NH-, or -N(CH₃)-, and two consecutive Xs adjacent to X representing -O-, -NH-, or -N(CH₃)-each represent -CH₂-; and
water (C),
the content of the secondary amine compound (A) being 50 to 70 wt%,
the content of the polyamine compound (B) is 0.1 to 5 wt%, based on the total weight of the liquid, and
the remaining liquid is water (C).

As used herein, the term "comprising" encompasses the terms "comprising" and "consisting essentially of."

### (A) Secondary Amine Compound

The secondary amine compound used in the present invention is a secondary amine compound represented by Formula (1)

R-NH-(CH₂)ₙ-OH (1)

wherein R represents a C₁₋₄ alkyl group, and n represents an integer of 2 to 5.
R in Formula (1) may be linear or branched. Specific examples include methyl, ethyl, *n*-propyl, isopropyl, *n*-butyl, isobutyl, *sec*-butyl, and the like. R is preferably isopropyl, *n-*butyl, or *sec*-butyl.
n in Formula (1) is an integer of 2 to 5, and more preferably an integer of 2 to 3.

Specific examples of the secondary amine compound represented by Formula (1) include 2-methylaminoethanol, 2-ethylaminoethanol, 2-*n*-propylaminoethanol, 2-isopropylaminoethanol, 2-*n*-butylaminoethanol, 2-isobutylaminoethanol, 2-*sec*-butylaminoethanol, 3-methylaminopropanol, 3-ethylaminopropanol, 3-*n-*propylaminopropanol, 3-isopropylaminopropanol, 3-*n-*butylaminopropanol, 3-isobutylaminopropanol, 3-*sec-*butylaminopropanol, and the like. The secondary amine compound represented by Formula (1) is preferably at least one member selected from the group consisting of 2-isopropylaminoethanol, 2-*n*-butylaminoethanol, 2-*sec*-butylaminoethanol, 3-isopropylaminopropanol, 3-*n*-butylaminopropanol, and 3-*sec-*butylaminopropanol, among these compounds.

There is no particular limitation on the purity of the secondary amine compound represented by Formula (1). The purity of the secondary amine compound represented by Formula (1) is preferably as high as possible, and is typically 95% or more, preferably 98% or more, and more preferably 99% or more.

The content of the secondary amine compound in the liquid for absorbing and recovering carbon dioxide of the present invention is 50 to 70 wt%, and preferably 55 to 65 wt%, based on the total weight of the liquid.

The mixed solvent of the present invention contains the secondary amine compound in a high concentration as described above, which leads to a reduction in the amount of heat generation during absorption of carbon dioxide. For example, in the case where carbon dioxide is absorbed from 0 to 0.6 moles in terms of molar ratio with respect to amine compound, the amount of heat generation per mole of amine compound is 76.6 kJ/mol CO₂ when a 30 wt% IPAE aqueous solution is used, and is as low as 70.2 kJ/mol CO₂ when the IPAE concentration is as high as 60 wt%. This is presumably due to the following reasons. The reaction of carbon dioxide with a secondary amine compound is accompanied mainly by the formation of bicarbonate bonds. According to ¹³C-NMR measurement, when a compound represented by Formula (1) wherein R is ethyl, which has two carbon atoms, i.e., ethylaminoethanol is used, the formation of carbamate bonds accounts for about 30%; when R is a substituent having 3 or 4 carbon atoms, only a trace amount of carbamate bond formation is observed. The amount of heat generation in the process of absorption of carbon dioxide is mainly attributed to the formation of ion pairs between bicarbonate ions and protonated amines, as well as the solvation with water used as a solvent. As such, it is presumed that the use of the secondary amine compound in a high concentration causes a change in the stable structure of each ion in the liquid, including solvation, resulting in a reduction in the heat of reaction. The amount of heat generation during absorption of carbon dioxide corresponds to the amount of heat required during separation of carbon dioxide. Therefore, a reduction in the amount of heat generation can achieve a reduction in energy consumption required for separation of carbon dioxide. Thus, an effect that contributes to a reduction in energy required for recovery of carbon dioxide is expected.

### (B) Polyamine Compound

The polyamine compound used in the present invention is a polyamine compound represented by Formula (2)

R¹R²N-(X)ₘ-NR³R⁴ (2)

wherein R¹, R², R³, and R⁴ each independently represent a hydrogen atom or a C₁₋₂ alkyl group, Xs each represent -CH₂-, -O-, -NH-, or -N(CH₃)-, and m represents an integer of 5 to 20, with the proviso that at least one of m Xs is -O-, -NH-, or -N(CH₃)-, and two consecutive Xs adjacent to X representing -O-, -NH-, or -N(CH₃)-each represent -CH₂-.

The polyamine compound represented by Formula (2) has two or more amino groups in the same molecule. In other words, the polyamine compound represented by Formula (2) is a compound derived from an alkanediamine compound having m carbon atoms, i.e., R¹R²N-(CH₂)ₘ-NR³R⁴, wherein R¹, R², R³, R⁴, and m are the same as the above, by suitably replacing at least one methylene chain of its m methylene groups by -O-, -NH-, or -N(CH₃)- group via at least an ethylene group.

In view of ready availability, the polyamine compound represented by Formula (2) is preferably a polyamine compound represented by Formula (3)

R¹R²N-(CH₂)ₚ-R⁵-[(CH₂)ᵣ-R⁵]ₛ-(CH₂)_{q}-NR³R⁴ (3)

wherein R¹, R², R³, and R⁴ each independently represent a hydrogen atom or a C₁₋₂ alkyl group, (s+1) R⁵s may be the same or different, and each independently represent -O-, -NH-, or -N(CH₃)-,
p, q, and r each represent an integer of 2 to 16 (preferably an integer of 2 to 4), and s represents an integer of 0 to 5 (preferably an integer of 0 to 3). However, the values of p, q, r, and s satisfy the following requirement: 5≤p+q+(r+1)s+1≤20 (preferably, 5≤p+q+(r+1)s+1≤15).

The C₁₋₂ alkyl groups represented by R¹, R², R³, and R⁴ are methyl or ethyl.

R⁵s represent -O-, -NH-, or -N(CH₃)-, and it is more preferable that at least one of the R⁵s be -NH- or -N(CH₃)-.

Examples of the polyamine compound represented by Formula (2) include diethylenetriamine, triethylenetetramine, tetraethylenepentamine, pentaethylenehexamine, spermine, spermidine, 3,3'-diaminodipropylamine, *N,N'*-bis(3-aminopropyl) ethylenediamine, *N*,*N*'-bis(2-aminoethyl)-1,3-propanediamine, 2,2'-oxybis(ethylamine), 1,2-bis(2-aminoethoxy) ethane, and the like, and these compounds may be suitably substituted on terminal nitrogen atom or atoms with C₁₋₂ alkyl group or groups and/or substituted on other nitrogen atom or atoms with methyl. Specific examples of the polyamine compound represented by Formula (2) include diethylenetriamine, triethylenetetramine, tetraethylenepentamine, pentaethylenehexamine, spermine, spermidine, 3,3'-diaminodipropylamine, *N*,*N*'-bis(3-aminopropyl)ethylenediamine, *N,N*'-bis(2-aminoethyl)-1,3-propanediamine, 3,3'-diamino-*N-*methyldipropylamine, *N,N*-bis[3-(methylamino)propyl]methylamine, 3,3'-iminobis(*N,N*-dimethylpropylamine), 3-[3-(*N,N-*dimethylamino)propylamino]propylamine, 2,2'-oxybis(ethylamine), 1,2-bis(2-aminoethoxy)ethane, and the like.

The content of the polyamine compound in the liquid for absorbing and recovering carbon dioxide of the present invention is 0.1 to 5 wt%, based on the total weight of the liquid, from the viewpoint of achieving the effects of improving carbon dioxide separation performance and carbon dioxide absorption performance, and in particular, absorption rate. To achieve more excellent overall performance improvement effects in both the carbon dioxide separation performance and the absorption rate, the content of the polyamine compound in the liquid of the present invention is more preferably 0.1 to 1.0 wt%, and particularly preferably 0.1 to 0.8 wt%, based on the total weight of the liquid.

The secondary amine compound and the polyamine compound may be commercially available products, or can be produced by known methods.

### (C) Water

The liquid for absorbing and recovering carbon dioxide of the present invention contains water.

The content of water in the liquid for absorbing and recovering carbon dioxide of the present invention is
limited, so that the remaining liquid is water. The content of water in the liquid is
preferably 49.9 to 25 wt%, and more preferably 44.9 to 30 wt%, based on the total weight of the liquid.

### (D) Other Components

If necessary, the liquid of the present invention may contain other components in addition to the secondary amine compound, the polyamine compound, and water, as long as the effects of the present invention are not impaired. Examples of other components include stabilizers to ensure the chemical or physical stability of the liquid (side reaction inhibitors such as antioxidants), inhibitors to prevent the deterioration of the materials of devices and equipment in which the liquid of the present invention is used (such as corrosion inhibitors), and the like. The content of these other components is not particularly limited as long as the effects of the present invention are not impaired, and is preferably 5 wt% or less, based on the total weight of the liquid for absorbing and recovering carbon dioxide of the present invention.

### Method for Absorbing and Recovering Carbon Dioxide

The method for absorbing and recovering carbon dioxide of the present invention comprises the following two steps:
(1) bringing a carbon dioxide-containing gas into contact with the liquid for absorbing and recovering carbon dioxide of the present invention to absorb carbon dioxide from the gas; and
(2) heating the liquid obtained in step (1), which contains the absorbed carbon dioxide, to separate the carbon dioxide from the liquid.

### (1) Carbon Dioxide Absorption Step

The method for absorbing carbon dioxide into the liquid of the present invention is not particularly limited. Examples include a method comprising bubbling a carbon dioxide-containing gas in the liquid to absorb carbon dioxide; a method comprising mist-spraying the liquid over a gas stream (misting or spraying method); a method comprising bringing a gas into countercurrent contact with the liquid in an absorption tower containing a porcelain or metal mesh filler; and the like.

A carbon dioxide-containing gas is absorbed into the liquid at a temperature of typically room temperature to 60°C or less, preferably 50°C or less, and more preferably in the range of about 20°C to about 45°C. The lower the temperature, the larger the amount of carbon dioxide absorbed. However, the temperature is determined in accordance with the gas temperature and other factors. The absorption of carbon dioxide is typically performed at approximately atmospheric pressure, but can also be performed at a pressure higher than atmospheric pressure.

Examples of the carbon dioxide-containing gas include exhaust gases from thermal power plants, factory boilers, cement plant kilns using coal, heavy oil, natural gas, or the like as a fuel, ironworks blast furnaces where iron oxide is reduced with coke, ironworks converters where carbon in pig iron is combusted to produce steel, integrated coal gasification combined cycle facilities, and the like; raw natural gases; reformed gases; exhaust gases from transportation equipment using gasoline, heavy oil, light oil, or the like as a fuel, such as automobiles, ships, and aircrafts; and the like. The concentration of carbon dioxide in the gas is typically about 5 to about 30 volume%, and particularly about 6 to about 25 volume%. When the concentration of carbon dioxide is in the above-mentioned ranges, the effect of the present invention is advantageously provided. The carbon dioxide-containing gas may contain gases such as water vapor, CO, H₂S, COS, SO₂, NO₂, and hydrogen, in addition to carbon dioxide.

### (2) Carbon Dioxide Separation Step

The method of the present invention comprises the step of heating the liquid obtained in the carbon dioxide absorption step (1), to recover carbon dioxide.

Examples of methods for separating carbon dioxide from a liquid in which the carbon dioxide is absorbed, to recover the carbon dioxide in a high concentration include a method comprising heating the liquid obtained in step (1), which contains the absorbed carbon dioxide, to separate the carbon dioxide; a method comprising heating the liquid containing the absorbed carbon dioxide in a plate tower, a spray tower, or a separation tower containing a porcelain or metal mesh filler to increase the liquid contact interface; and the like. Carbon dioxide is thereby liberated and released from bicarbonate ions in the liquid.

The liquid temperature during separation of carbon dioxide is typically 70°C or more, preferably 80°C or more, and more preferably about 90°C to about 120°C. The higher the temperature, the larger the amount of carbon dioxide separated; however, the energy required for heating the liquid increases as the temperature increases. Therefore, the temperature is determined in accordance with the heat source temperature, the heat efficiency of a separation and recovery plant, or the like. The liquid from which carbon dioxide has been separated is resent to the carbon dioxide absorption step (1), and recycled. During this recycling period, the heat applied in the carbon dioxide separation step is effectively used in the recycling process to increase the temperature of a liquid that is to be sent to the carbon dioxide separation step through heat exchange, thereby resulting in a reduction of energy consumption in the entire recovery process.

The purity of carbon dioxide thus recovered is typically 98 to 99 volume% or more, which is an extremely high level of purity. The recovered carbon dioxide can not only be isolated and stored in underground facilities etc. for reducing carbon dioxide emissions into the atmosphere, but also used as, for example, starting materials for chemicals, starting materials for synthesis of polymer materials, and refrigerants for freezing foods and beverages.

The liquid of the present invention is expected to exhibit high reaction efficiency in the carbon dioxide absorption step and high energy efficiency in the carbon dioxide separation step. The reaction efficiency in the former is mainly due to the effect of the polyamine compound, and the energy efficiency in the latter is mainly due to an increase in the amount of carbon dioxide separated by high concentration and a reduction in the amount of heat generation during absorption of carbon dioxide. Although the reason for the reduction in the amount of heat generation is still not entirely clear, it is presumably because the energy of formation of ion pairs during absorption of carbon dioxide, and a change in, for example, the stable structure of ions due to solvation reduce the amount of heat required during separation of carbon dioxide.

### Examples

The present invention is described below in detail with reference to Examples. However, the present invention is not limited to these Examples.

### Example 1

A glass gas-washing bottle was immersed into a constant-temperature water bath that was set such that the liquid temperature was 40°C. This bottle was filled with 50 g of a mixed solvent of 60 wt% of 2-isopropylaminoethanol (IPAE; produced by Tokyo Chemical Industry Co., Ltd.) and 40 wt% of water, and 0.15 g of 3,3'-diamino-*N*-methyldipropylamine (produced by Tokyo Chemical Industry Co., Ltd.). A gas mixture of 20 volume% of carbon dioxide and 80 volume% of nitrogen was dispersed in the form of bubbles into this liquid at a rate of 0.7 L/min through a glass filter with a pore size of 100 µm and a diameter of 13 mm at atmospheric pressure to cause absorption for 60 minutes.

The concentration of carbon dioxide in the gas was continuously measured at the inlet and outlet of the absorbing liquid using an infrared carbon dioxide meter (Horiba Gas Analyzer VA-3000), and the amount of carbon dioxide absorbed was determined from the difference between the flow rate of carbon dioxide at the inlet and the flow rate of carbon dioxide at the outlet. Where necessary, the amount of inorganic carbon in the absorbing liquid was measured with a total organic carbon analyzer for gas chromatography (Shimadzu TOC-VCSH), and compared with the value obtained using the infrared carbon dioxide meter. The saturation absorption amount is defined as the amount of carbon dioxide absorbed until the concentration of carbon dioxide at the outlet of the absorbing liquid became equal to that at the inlet. Because the absorption rate varies depending on the absorption amount, the absorption rate at the time point at which carbon dioxide was absorbed in an amount equal to 1/2 of the saturated absorption amount was measured and compared.

Subsequently, the liquid temperature was increased to 70°C over several minutes in the same gas stream, and the amount of carbon dioxide separated was measured over 60 minutes under the same conditions. The carbon dioxide saturation absorption amount at 40°C was 155 g/kg, and the absorption rate at the time point at which carbon dioxide was absorbed in an amount equal to 1/2 of the saturated absorption amount was 4.3 g/kg/min. The amount of carbon dioxide separated at 70°C was 86 g/kg. The recovered carbon dioxide had a purity of 99.8%.

### Example 2

Each measurement was performed in the same manner as in Example 1, except that the gas-washing bottle was filled with 50 g of a mixed solvent of 60 wt% of IPAE and 40 wt% of water, and 0.15 g of tetraethylenepentamine (produced by Tokyo Chemical Industry Co., Ltd.), in place of the liquid described in Example 1.

### Example 3

Each measurement was performed in the same manner as in Example 1, except that the gas-washing bottle was filled with 50 g of a mixed solvent of 60 wt% of IPAE and 40 wt% of water, and 0.25 g of 3-[3-(*N,N*-dimethylamino)propylamino]propylamine (produced by Sigma-Aldrich Co. LLC.), in place of the liquid described in Example 1.

### Example 4

The carbon dioxide absorption rate at 40°C was measured in the same manner as in Example 1, except that the gas-washing bottle was filled with 50 g of a mixed solvent of 60 wt% of IPAE and 40 wt% of water, and 0.25 g of 1,2-bis(2-aminoethoxy)ethane (produced by Tokyo Chemical Industry Co., Ltd.), in place of the liquid described in Example 1. The carbon dioxide absorption rate at 40°C was 4.2 g/kg of absorbing liquid/min.

### Comparative Examples 1 and 2

Each measurement was performed in the same manner as in Example 1, except that the gas-washing bottle was filled with only a mixed solvent of 30 wt% of IPAE and 70 wt% of water (Comparative Example 1), or with only a mixed solvent of 60 wt% of IPAE and 40 wt% of water (Comparative Example 2), in place of the liquid described in Example 1.

### Example 5

Each measurement was performed in the same manner as in Example 1, except that the gas-washing bottle was filled with 50 g of a mixed solvent of 60 wt% of IPAE and 40 wt% of water, and 0.15 g of 1,2-bis(2-aminoethoxy)ethane (produced by Tokyo Chemical Industry Co., Ltd.), in place of the liquid described in Example 4.

### Examples 6 and 7

Each measurement was performed in the same manner as in Example 1, except that the gas-washing bottle was filled with 50 g of a mixed solvent of 55 wt% of IPAE and 45 wt% of water, and 1.00 g of 1,2-bis(2-aminoethoxy)ethane (produced by Tokyo Chemical Industry Co., Ltd.) (Example 6); or with 50 g of a mixed solvent of 55 wt% of IPAE and 45 wt% of water, and 0.15 g (Example 7), in place of the liquid described in Example 1.

### Comparative Example 3

Each measurement was performed in the same manner as in Example 1, except that the gas-washing bottle was filled with only a mixed solvent of 55 wt% of IPAE and 45 wt% of water, in place of the liquid described in Example 1.

### Example 8

Each measurement was performed in the same manner as in Example 1, except that the gas-washing bottle was filled with 50 g of a mixed solvent of 65 wt% of IPAE and 35 wt% of water, and 0.25 g of tetraethylenepentamine (produced by Tokyo Chemical Industry Co., Ltd.), in place of the liquid described in Example 1.

### Examples 9 to 11

Each measurement was performed in the same manner as in Example 1, except that the gas-washing bottle was filled with 50 g of a mixed solvent of 60 wt% of EAE and 40 wt% of water, and 1.00 g of triethylenetetramine (produced by Tokyo Chemical Industry Co., Ltd.) (Example 9); with 50 g of a mixed solvent of 60 wt% of EAE and 40 wt% of water, and 0.15 g of 1,2-bis(2-aminoethoxy)ethane (produced by Tokyo Chemical Industry Co., Ltd.) (Example 10); or with 50 g of a mixed solvent of 60 wt% of EAE and 40 wt% of water, and 1.00 g (Example 11), in place of the liquid described in Example 1.

### Comparative Example 4

Each measurement was performed in the same manner as in Example 1, except that the gas-washing bottle was filled with only a mixed solvent of 60 wt% of EAE and 40 wt% of water, in place of the liquid described in Example 1.

Table 1 shows the results of the Examples and Comparative Examples.

**Table 1**

| | Composition of Absorbing Liquid | | CO₂ Absorption Performance at 40°C | | Separation Performance at 70°C |
|---|---|---|---|---|---|
| | Solvent (Weight Ratio) | Polyamine Compound | CO₂ Saturation Absorption Amount (g/kg of Absorbing Liquid) | CO₂ Absorption Rate (g/kg of Absorbing Liquid/min) | Amount of Separated (g/kg of Absorbing Liquid) |
| Example 1 | IPAE:Water | 3,3'-diamino-*N*-methyldipropylamine | 155 | 4.3 | 86 |
| | 60:40 | 0.15 g | | | |
| Example 2 | IPAE:Water | Tetraethylenepentamine | 159 | 4.4 | 87 |
| | 60:40 | 0.15 g | | | |
| Example 3 | IPAE:Water | 3-[3-(*N,N-*dimethylamino)propylamino]propylamine | 158 | 4.4 | 84 |
| | 60:40 | 0.25 g | | | |
| Example 5 | IPAE:Water | 1,2-bis(2-aminoethoxy)ethane | 161 | 4.5 | 83 |
| | 60:40 | 0.15 g | | | |
| Example 6 | IPAE:Water | 1,2-bis(2-aminoethoxy)ethane | 160 | 4.5 | 78 |
| | 55:45 | 0.15 g | | | |
| Example 7 | IPAE:Water | 1,2-bis(2-aminoethoxy)ethane | 160 | 4.6 | 77 |
| | 55:45 | 1.00 g | | | |
| Example 8 | IPAE:Water | Tetraethylenepentamine | 157 | 4.1 | 86 |
| | 65:35 | 0.25 g | | | |
| Example 9 | EAE:Water | Triethylenetetramine | 165 | 4.3 | 22 |
| | 60:40 | 1.00 g | | | |
| Example 10 | EAE:Water | 1,2-bis(2-aminoethoxy)ethane | 160 | 4.3 | 21 |
| | 60:40 | 0.15 g | | | |
| Example 11 | EAE:Water | 1,2-bis(2-aminoethoxy)ethane | 162 | 4.4 | 25 |
| | 60:40 | 1.00 g | | | |
| Comparative Example 1 | IPAE:Water | Not added | 99 | 5.0 | 35 |
| | 30:70 | | | | |
| Comparative Example 2 | IPAE:Water | Not added | 148 | 4.1 | 83 |
| | 60:40 | | | | |
| Comparative Example 3 | IPAE:Water | Not added | 157 | 4.3 | 77 |
| | 55:45 | | | | |
| Comparative Example 4 | IPAE:Water | Not added | 146 | 3.5 | 69 |
| | 65:35 | | | | |
| Comparative Example 5 | EAE:Water | Not added | 156 | 4.1 | 19 |
| | 60:40 | | | | |

The results of Examples 1 to 5 and Comparative Examples 1 and 2 reveal that in each of Examples 1 to 5, which use a secondary amine compound in a high concentration (60 wt%), the absorption rate was higher than the 4.1 g/L of Comparative Example 2, which uses a secondary amine compound in the same concentration, and the carbon dioxide saturation absorption amount per unit of the absorbing liquid increased. Therefore, effects achieved by addition of a polyamine compound were confirmed.

In Comparative Example 1, which uses a secondary amine compound at a concentration as low as 30 wt%, the absorption rate was high, but the carbon dioxide saturation absorption amount and the amount of carbon dioxide separated were low. In Comparative Example 2, which uses a secondary amine compound at a concentration of 60 wt%, a significant reduction in the absorption rate was observed. This indicates that it is difficult to improve the performance of the absorbing liquid by simply employing a high concentration.

The results of Examples 6 and 7 and Comparative Example 3 reveal that when the concentration of a secondary amine compound was 55 wt%, the amount of carbon dioxide separated per unit of the absorbing liquid was a similar level, but the absorption rate and the carbon dioxide saturation absorption amount per unit of the absorbing liquid were increased by adding a polyamine compound. Thus, effects achieved by addition of a polyamine compound were confirmed.

The results of Example 8 and Comparative Example 4 reveal that when the concentration of a secondary amine compound was 65 wt%, the absorption rate, the carbon dioxide saturation absorption amount per unit of the absorbing liquid, and the amount of carbon dioxide separated per unit of the absorbing liquid were notably increased by adding a polyamine compound. Thus, effects achieved by addition of a polyamine compound were confirmed.

The above results show that in general, the higher the concentration of a secondary amine compound, the greater the effects achieved by addition of a polyamine compound.

The results of Examples 9 to 11 and Comparative Example 5 reveal that even when the secondary amine compound is EAE, the absorption rate, the carbon dioxide saturation absorption amount per unit of the absorbing liquid, and the amount of carbon dioxide separated per unit of the absorbing liquid were increased by adding a polyamine compound. Thus, effects achieved by addition of a polyamine compound were confirmed.

### Corrosiveness Evaluation Test

The liquid of Example 1 was tested for corrosion of an SS400 metal test piece. The test was conducted using a Hastelloy autoclave under a carbon dioxide-saturated atmosphere with carbon monoxide at 130°C for 48 hours. The results confirmed that the corrosion caused by the liquid of Example 1 on the SS400 was total corrosion, and the calculated corrosion rate was 0.06 mm/year. The results revealed that although the liquid of Example 1 is slightly corrosive, the corrosiveness is low.

## Claims

1. A liquid for absorbing and recovering carbon dioxide from a carbon dioxide-containing gas, the liquid consisting essentially of:
a secondary amine compound (A) represented by Formula (1)
R-NH-(CH₂)ₙ-OH (1)
wherein R represents a C₁₋₄ alkyl group, and n represents an integer of 2 to 5;
a polyamine compound (B) represented by Formula (2)
R¹R²N-(X)ₘ-NR³R⁴ (2)
wherein R¹, R², R³, and R⁴ each independently represent a hydrogen atom or a C₁₋₂ alkyl group, Xs each represent -CH₂-, -O-, -NH-, or -N(CH₃)-, and m represents an integer of 5 to 20, with the proviso that at least one of m Xs is -O-, -NH-, or -N(CH₃)-, and two consecutive Xs adjacent to X
representing -O-, -NH-, or -N(CH₃)- each represent -CH₂-; and
water (C),
wherein the content of the secondary amine compound (A) is 50 to 70 wt%, the content of the polyamine compound (B) is 0.1 to 5 wt%, based on the total weight of the liquid, and
the remaining liquid is water (C).

2. The liquid according to claim 1, wherein the content of the polyamine compound (B) is 0.1 to 1 wt%, based on the total weight of the liquid.

3. The liquid according to claim 1 or 2, wherein R is isopropyl, *n*-butyl, or *sec*-butyl, and n is 2 or 3.

4. The liquid according to any one of claims 1 to 3, wherein the polyamine compound (B) is at least one polyamine selected from the group consisting of diethylenetriamine, triethylenetetramine, tetraethylenepentamine, pentaethylenehexamine, spermine, spermidine, 3,3'-diaminodipropylamine, *N,N*'-bis(3-aminopropyl)ethylenediamine, *N,N*'-bis(2-aminoethyl)-1,3-propanediamine, 3,3'-diamino-*N-*methyldipropylamine, *N,N*-bis[3-(methylamino)propyl]methylamine, 3,3'-iminobis(*N,N-*dimethylpropylamine), 3-[3-(*N,N-*dimethylamino)propylamino]propylamine, 2,2'-oxybis(ethylamine), and 1,2-bis(2-aminoethoxy)ethane.

5. A method for absorbing and recovering carbon dioxide from a carbon dioxide-containing gas, the method comprising the steps of:
(1) bringing the carbon dioxide-containing gas into contact with the liquid according to any one of claims 1 to 4 to absorb carbon dioxide from the gas; and
(2) heating the liquid obtained in step (1), which contains the absorbed carbon dioxide, to separate the carbon dioxide from the liquid.

## Patentansprüche

1. Eine Flüssigkeit zur Absorption und Rückgewinnung von Kohlendioxid aus einem Kohlendioxid-haltigen Gas, wobei die Flüssigkeit im Wesentlichen besteht aus:
einer sekundären Aminverbindung (A), dargestellt durch Formel (1)
R-NH-(CH₂)ₙ-OH (1)
wobei R eine C₁₋₄=Alkylgruppe darstellt und n eine ganze Zahl von 2 bis 5 darstellt;
einer Polyaminverbindung (B), dargestellt durch Formel (2)
R¹R²N-(X)ₘ-NR³R⁴ (2)
wobei R¹, R², R³ und R⁴ jeweils unabhängig ein Wasserstoffatom oder eine C₁₋₂-Alkylgruppe darstellen, die Reste X jeweils -CH₂-, -O-, -NH- oder -N(CH₃)- darstellen und m eine ganze Zahl von 5 bis 20 darstellt, mit der Maßgabe, dass mindestens einer der m Reste X -O-, -NH- oder -N(CH₃)- darstellt und zwei aufeinanderfolgende Reste X, benachbart zu X, welches -O-, -NH- oder -N(CH₃)- darstellt, jeweils -CH₂- darstellen; und
Wasser (C),
wobei der Gehalt an sekundärer Aminverbindung (A) 50 bis 70 Gew.-% beträgt, der Gehalt der Polyaminverbindung (B) 0,1 bis 5 Gew.-% beträgt, bezogen auf das Gesamtgewicht der Flüssigkeit, und
die verbleibende Flüssigkeit Wasser (C) ist.

2. Die Flüssigkeit gemäß Anspruch 1, wobei der Gehalt an Polyaminverbindung (B) 0,1 bis 1 Gew.-% beträgt, bezogen auf das Gesamtgewicht der Flüssigkeit.

3. Die Flüssigkeit gemäß Anspruch 1 oder 2, wobei R Isopropyl, n-Butyl oder sec-Butyl darstellt und n gleich 2 oder 3 ist.

4. Die Flüssigkeit gemäß einem der Ansprüche 1 bis 3, wobei die Polyaminverbindung (B) mindestens ein Polyamin ist, ausgewählt aus der Gruppe bestehend aus Diethylentriamin, Triethylentetramin, Tetraethylenpentamin, Pentaethylenhexamin, Spermin, Spermidin, 3,3 '-Diaminodipropylamin, N,N'-Bis(3-aminopropyl)ethylendiamin, N,N'-Bis(2-aminoethyl)-1,3-propandiamin, 3,3'-Diamino-N-methyldipropylamin, N,N-Bis[3-(methylamino)propyl]methylamin, 3,3'-Iminobis(N,N-dimethylpropylamin), 3-[3-(N,N-Dimethylamino)propylamino]propylamin, 2,2'-Oxybis(ethylamin) und 1,2-Bis(2-aminoethoxy)ethan.

5. Ein Verfahren zur Absorption und Rückgewinnung von Kohlendioxid aus einem Kohlendioxid-haltigen Gas, wobei das Verfahren die Schritte umfasst:
(1) Inkontaktbringen des Kohlendioxid-haltigen Gases mit der Flüssigkeit gemäß einem der Ansprüche 1 bis 4, um Kohlendioxid aus dem Gas zu absorbieren; und
(2) Erwärmen der in Schritt (1) erhaltenen Flüssigkeit, welche das absorbierte Kohlendioxid enthält, um das Kohlendioxid aus der Flüssigkeit abzutrennen.

## Revendications

1. Liquide pour absorber et récupérer du dioxyde de carbone à partir d'un gaz contenant du dioxyde de carbone, le liquide consistant essentiellement en :
un composé amine secondaire (A) représenté par la formule (1)
R-NH-(CH₂)ₙ-OH (1)
dans laquelle R représente un groupe alkyle en C₁₋₄, et n représente un entier de 2 à 5 ;
un composé polyamine (B) représenté par la formule (2)
R¹R²N-(X)ₘ-NR³R⁴ (2)
dans laquelle chacun de R¹, R², R³ et R⁴ représente indépendamment un atome d'hydrogène ou un groupe alkyle en C₁₋₂, chaque X représente -CH₂-, -O-, -NH-, ou -N(CH₃)-, et m représente un entier de 5 à 20, sous réserve qu'au moins l'un des m X soit -O-, -NH-, ou -N(CH₃)-, et deux X consécutifs adjacents au X représentant -O-, -NH-, ou -N(CH₃)- représentent chacun -CH₂- ; et
de l'eau (C),
dans lequel la teneur en composé amine secondaire (A) est de 50 à 70 % en poids, la teneur en composé polyamine (B) est de 0,1 à 5 % en poids, par rapport au poids total du liquide, et le liquide restant est de l'eau (C).

2. Liquide selon la revendication 1, dans lequel la teneur en composé polyamine (B) est de 0,1 à 1 % en poids par rapport au poids total du liquide.

3. Liquide selon la revendication 1 ou 2, dans lequel R est isopropyle, n-butyle ou sec-butyle, et n vaut 2 ou 3.

4. Liquide selon l'une quelconque des revendications 1 à 3, dans lequel le composé polyamine (B) est au moins une polyamine choisie dans le groupe constitué par la diéthylènetriamine, la triéthylènetétramine, la tétraéthylènepentamine, la pentaéthylènehexamine, la spermine, la spermidine, la 3,3'-diaminodipropylamine, la N,N'-bis(3-aminopropyl)éthylènediamine, la N,N'-bis(2-aminoéthyl)-1,3-propanediamine, la 3,3'-diamino-N-méthyldipropylamine, la N,N-bis[3-(méthylamino)propyl]méthylamine, la 3,3'-iminobis(N,N-diméthylpropylamine), la 3-[3-(N,N-diméthylamino)propylamino]propylamine, la 2,2'-oxybis(éthylamine), et le 1,2-bis(2-aminoéthoxy)éthane.

5. Méthode pour absorber et récupérer du dioxyde de carbone à partir d'un gaz contenant du dioxyde de carbone, la méthode comprenant les étapes:
(1) mise en contact du gaz contenant du dioxyde de carbone avec le liquide selon l'une quelconque des revendications 1 à 4 pour que le dioxyde de carbone soit absorbé à partir du gaz ; et
(2) chauffage du liquide obtenu dans l'étape (1), qui contient le dioxyde de carbone absorbé, pour séparer le dioxyde de carbone du liquide.
